# EUROPÄISCHE PATENTANMELDUNG

(11) **EP 0 585 748 A2**
(43) Veröffentlichungstag der Anmeldung: **09.03.1994**
(21) Anmeldenummer: 93113299.7
(22) Anmeldetag: 19.08.1993
(51) Int. Cl.: B23K 35/28, C04B 37/00, C04B 37/02, B23K 35/00

(54) **Verfahren zum Aufbringen einer Metallschicht auf ein Bauteil und zum Verbinden von zwei Bauteilen**

(30) Priorität: 02.09.1992 DE 4229306
(71) Anmelder: Austria Metall AG, A-5282 Ranshofen (AT)
(72) Erfinder: Degischer, Hans Peter, A-5020 Salzburg (AT)
(74) Vertreter: WILHELMS, KILIAN & PARTNER Patentanwälte

(57) **Zusammenfassung**

Verfahren zum Aufbringen einer Metallschicht auf die Oberfläche eines Bauteils (12) aus einem durch das metallische Lotmaterial nicht oder nur schlecht benetzbaren Material. Die notwendige Benetzung des aus einem nicht oder nur schwer benetzbaren Material bestehenden Bauteils (12) wird dadurch erreicht, daß eine metallische Lotschmelze (13) gegen die Verbindungsfläche dieses Bauteils (12) gedrückt wird.

## Beschreibung

Die Erfindung betrifft ein verfahren zum Aufbringen einer Metallschicht auf die Oberfläche eines Bauteils aus einem Material, das durch eine Metallschmelze nicht ohne weiteres benetzbar ist.

Die Erfindung betrifft gleichfalls ein Verfahren zum Verbinden von zwei Bauteilen, von denen wenigstens eines wenigstens im Bereich der Verbindungsfläche aus einem Material besteht, das durch eine Metallschmelze nicht ohne weiteres benetzbar ist, bei dem eine metallische Verbindungsschicht zwischen den Bauteilen vorgesehen wird. Ein derartiges Verfahren ist aus der EP-0 187 025 A2 bekannt.

Bei der Verbindung von Bauteilen mittels metallischer Schmelzen ergibt sich das Problem, daß viele Materialien, insbesondere keramische Materialien durch die metallischen Schmelzen nicht ohne weiteres benetzt werden.

Um dennoch derartige Bauteile miteinander zu verbinden, wird bei dem eingangs genannten aus der EP 0 187 025 A2 bekannten Verfahren eine Nickel-, Nickel-Blei oder Kobalt-Blei plattierte Aluminium-Lotlegierung als Verbindungsschicht zwischen den miteinander zu verbindenden Bauteilen vorgesehen, die entweder beide aus einem keramischen Material oder von denen eines aus einem Metallmaterial und das andere aus einem keramischen Material besteht. Der Benetzungsvorgang, d. h. der Lötvorgang muß allerdings in einer Inertgasathmosphäre oder unter einem Vakuum erfolgen, um unerwünschte Reaktionen auszuschließen.

Es ist weiterhin bekannt, derartige Bauteile dadurch zu verbinden, daß die Oberfläche des nichtbenetztbaren Bauteils beispielsweise die Keramikoberfläche nach einem speziellen chemischen Behandlungsverfahren so beschichtet wird, daß anschließend dieses Bauteil z. B. mit Aluminium mit dem anderen Bauteil verlötet werden kann. Schließlich ist es auch bekannt, die Keramikoberfläche durch Aufdampfen mit einer dünnen Metallschicht zu beschichten, die z. B. mit Aluminium lötbar ist.

Bei den oben beschriebenen bekannten Verfahren sind allerdings zusätzliche Schichten erforderlich, die durch zusätzliche aufwendige Verfahrensschritte wenigstens auf das aus einem nichtbenetzbaren Material, beispielsweise einem keramischen Material bestehende Bauteil aufgebracht werden müssen. Diese artfremden Schichten bilden mit dem Lot ein elektrochemisches Lokalelement, das korrosionsanfällig ist. Bei dem eingangs genannten Verfahren gemäß EP 0 187 025 A2 ist es darüberhinaus erforderlich, beim Verlöten eine Inertgas- oder Vakuumumgebung vorzusehen.

Aus der DE 33 07 700 C2 und der DE 33 07 702 A1 ist es weiterhin bekannt, zwei Bauteile durch Thermokompression zu verbinden, indem zwischen den zu verbindenden Bauteilen ein festes Lotmaterial angeordnet wird, das beispielsweise aus einem Reinaluminiumdraht besteht, und die Bauteile mit dem zwischengefügten Lotmaterial bei einer erhöhten Temperatur zwischen 450 bis 550° zusammengedrückt werden. Bei einem derartigen Thermokompressionsverfahren wird das Lotmaterial nicht bis auf seinen Schmelzpunkt erwärmt, d.h. nicht aufgeschmolzen, sondern durch plastisches Fließen umgeformt, wobei die Verbindung unter einer Vakuum- oder Schutzgasumgebung stattfinden muß.

Die der Erfindung zugrundeliegende Aufgabe besteht demgegenüber darin, ein Verfahren der eingangs genannten Art anzugeben, mit dem ein Bauteil aus einem durch eine Metallschmelze nicht ohne weiteres benetzbaren Material beschichtet oder zwei Bauteile miteinander verbunden werden können, von denen wenigstens eines wenigstens im Bereich der Verbindungsfläche aus einem Material besteht, daß durch eine Metallschmelze nicht ohne weiteres benetzbar ist, bei dem eine zu der Verbindungsschicht zusätzliche Zwischenschicht nicht benötigt wird und keine Vakuum- oder Schutzgasatmosphäre notwendig ist.

Diese Aufgabe wird gemäß der Erfindung dadurch gelöst, daß bei dem Verfahren zum Aufbringen einer Metallschicht auf die Oberfläche eines Bauteils aus einem Material, das durch eine Metallschmelze nicht ohne weiteres benetzbar ist, eine Schmelze der aufzubringenden Metallschicht gegen die Oberfläche des Bauteils gedrückt wird, wodurch diese benetzt wird, und die Schmelze anschließend abkühlen und aushärten gelassen wird.

Bei dem erfindungsgemäßen Verfahren zum Verbinden von zwei Bauteilen, von denen wenigstens eines wenigstens im Bereich der Verbindungsfläche aus einem Material besteht, das durch eine Metallschmelze nicht ohne weiteres benetzbar ist, bei dem eine metallische Verbindungsschicht zwischen den Bauteilen vorgesehen wird, wird eine Schmelze des Metalls der metallischen Verbindungsschicht zwischen den Bauteilen angeordnet und gegen die Verbindungsfläche des wenigstens einen nicht benetzbaren Bauteils gedrückt, wodurch diese benetzt wird, und wird die Schmelze anschließend abkühlen und aushärten gelassen.

Durch den bei dem erfindungsgemäßen Verfahren ausgeübten Druck, mit dem die metallische Schmelze gegen die Oberfläche des einen Bauteils oder gegen die Verbindungsfläche des wenigstens einen zu verbindenden Bauteils gedrückt wird, wird eine Benetzung dieser Fläche zwangsweise herbeigeführt, wobei sich bei der Verwendung von metallischen Lotschmelzen, insbesondere von Aluminium- und Magnesiumschmelzen, eine sehr intensive Verbindung ergibt. Das wird dadurch erreicht, daß das Metallmaterial über seinen Schmelzpunkt erwärmt wird, so daß es eine echte Flüssigkeit ist, die abgesehen von der Oberflächenspannung und der Massenträgheit einer Umformung keine Kraft entgegensetzt. Dadurch gibt es keine Untergrenze für den Umformungsgrad. Das erfindungsgemäße Verfahren kann in normaler Umgebungsluft erfolgen, Vakuum- oder Schutzgasatmosphären sind nicht erforderlich. Der Grund dafür dürfte darin zu sehen sein, daß die Metallschmelze die Fläche, die sie benetzen soll, von der Außenumgebung abdichtet, die Metallschmelze Lufteinschlüsse aufsaugt, indem sie mit Lufteinschlüssen Verbindungen eingeht, die nicht gasförmig sind, oder indem sie einen Teil der Lufteinschlüsse löst, und sich die Reaktionsprodukte zwischen der Umgebungsluft und der Schmelze nicht an der Oberfläche konzentrieren, sondern sich in der Schmelze verteilen. Sie stören damit weniger als Reaktionsprodukte eines oberflächlich reagierenden Festkörpers, welche zwangsläufig an der Oberfläche des Körpers eine sehr hohe Konzentration haben, und zwar auch dann, wenn der Körper plastisch verformt wird, wie es beim Thermokompressionsverfahren der Fall ist.

Ein weiterer Vorteil des erfindungsgemäßen Verfahrens besteht darin, daß es sehr schnell abläuft, d.h. das gewünschte Ergebnis innerhalb sehr kurzer Zeit liefert. Der Grund dafür besteht darin, daß eine Metallschmelze außerordentlich reaktiv ist.

Besonders bevorzugte Ausgestaltungen und Weiterbildungen der erfindungsgemäßen Verfahrens sind Gegenstand der Patentansprüche 2 sowie 4 bis 16.

Im folgenden werden anhand der zugehörigen Zeichnungen besonders bevorzugte Ausführungsbeispiele der Erfindung näher beschrieben. Es zeigen:
Fig. 1 in einer Schnittansicht ein erstes Ausführungsbeispiel des erfindungsgemäßen Verfahrens,
Fig. 2 in einer Schnittansicht ein zweites Ausführungsbeispiel des erfindungsgemäßen Verfahrens, und
Fig. 3 in einer Schnittansicht ein drittes Ausführungsbeispiel des erfindungsgemäßen Verfahrens.

Um zwei Bauteile mit einem metallischen Lot zu verbinden, von denen wenigstens eines aus einem durch das Lot nicht benetzbaren Material, insbesondere aus einem keramischen Material besteht, muß eine Benetzung der Verbindungsfläche dieses Bauteiles herbeigeführt werden, ohne daß dabei starke oder falsche chemische Reaktionen auftreten, was insbesondere bei metallischen Schmelzen wie Aluminiumschmelzen und Magnesiumschmelzen der Fall ist, die aufgrund ihrer hohen Reaktivität bei der Benetzung auch Schäden verursachen können. Dazu ist es vorteilhaft, wenn hohe Temperaturen nur kurzzeitig auftreten oder das Auftreten von hohen Temperaturen überhaupt vermieden wird.

Weiterhin sollte der Schmelzpunkt des Lotes niedriger als der Schmelzpunkt der zu verbindenden Teile sein, er darf auch nicht so hoch sein, daß die zu verbindenden, d. h. zu verlötenden Teile beschädigt werden.

Unter Berücksichtigung dieser Erfordernisse wird beispielsweise zum Verbinden von zwei Bauteilen, von denen eines aus einem keramischen Material besteht, während das andere Bauteil aus einem Material besteht, das mit Aluminiumlot lötbar ist, die Keramikoberfläche mit einer Aluminiumlotschmelze dadurch benetzt, daß diese Schmelze an die Keramikoberfläche gedrückt wird. Durch den dabei aufgebrachten Druck wird die Benetzung zwangsweise herbeigeführt und wird aufgrund der hohen Raktivität der Aluminiumlotschmelze eine intensive Verbindung erzielt.

Was die Dicke der Lotschicht anbetrifft, so genügt theoretisch eine monoatomare Schicht, vorzugsweise liegt die Dicke der Lotschicht jedoch im Bereich von 0,1 bis 10 µm. Eine Obergrenze für die Lotschicht ist dann gegeben, wenn das geschmolzene Lot durch den aufgebrachten Druck beim Benetzen wegfließt.

Der für die Benetzung erforderliche Druck steigt mit der Nichtbenetzbarkeit (Kenngröße: Benetzungswinkel) der Materialen der zu verbindenden Bauteile an. Der erforderliche Mindestdruck liegt bei 0,1 bis 0,2 MPa, seine Obergrenze ist dann erreicht, wenn eine mechanische Beschädigung der zu verbindenden Bauteile zu befürchten ist. Der Druck liegt insbesondere bei 10 MPa.

Der Druck muß über einem gewissen Mindestdruck liegen, die für die Verbindung erforderliche Zeit ist dann vom Druck weitgehend unabhängig.

Die Temperatur muß hoch genug sein, damit das Lot geschmolzen ist, bei typischen Aluminiumloten liegt diese Temperatur bei 560 bis 640° C.

Die Abkühlung nach Benetzung des keramischen Bauteils unter die Schmelztemperatur des Lotes muß nicht unbedingt schon vor der Abnahme des Druckes erfolgen, diese Abkühlung kann auch erst nach Abnahme des Druckes bewirkt werden.

Als Lotmaterialien kommen Reinmetalle wie Reinaluminium und Reinmagnesium sowie entsprechende Legierungen in Frage. Legierungen haben den Vorteil, daß sie so reaktiv sind, daß eine gute Verbindung entstehen kann. Das ist insbesondere bei Aluminiumlegierungen der Fall. Weiterhin haben Legierungen einen niedrigen Schmelzpunkt, so daß die Umgebung einer geringen thermischen Belastung ausgesetzt ist und kein Wegschmelzen der angrenzenden Metallschicht des Metallbauteils zu befürchten ist. Weiterhin ist das Schmelzintervall bei Lotlegierungen sehr klein, was bedeutet, daß der Übergang von der festen auf die flüssige Phase und umgekehrt sehr direkt erfolgt und somit die Zeit, über die eine hohe Temperatur herrscht, kurz ist und die Verbindung schneller hält.

Lotlegierungen sind daher am besten geeignet, da sie eutektische oder fast eutektische Legierungen sind und daher kein oder nur ein sehr kleines Schmelzintervall haben. Der Schmelzpunkt liegt am Minimum der Temperatur im Legierungsschaubild. Somit ist ein schneller Übergang aus der festen in die flüssige Phase gegeben und ist die Zeit kurz, über die eine hohe Temperatur herrscht.

Legierungen aus den gleichen Grundsubstanzen mit verschiedenen Mischungsverhältnissen können damit gut gelötet werden, da sie bei Löttemperatur noch nicht schmelzen.

Reinmetallote wie beispielsweise Reinaluminiumlote haben gleichfalls den Vorteil eines kurzen Überganges von der festen auf die flüssige Phase und einer elektrisch höheren Leitfähigkeit als Aluminiumlegierungen, was bei bestimmten Anwendungen günstig ist. Der Nachteil von Reinaluminium besteht im höheren Schmelzpunkt.

Nach dem obigen Verfahren können Materialien, z.B. Keramik, die bei Umgebungsbedingungen (Drucktemperatur) noch fest sind, mit Aluminium verlötet werden.

Es ist jedoch manchmal schwierig, eine Lotschicht nur als Oberflächenbeschichtung auf eine Substratoberfläche aus einem nichtbenetzbaren Material aufzubringen.

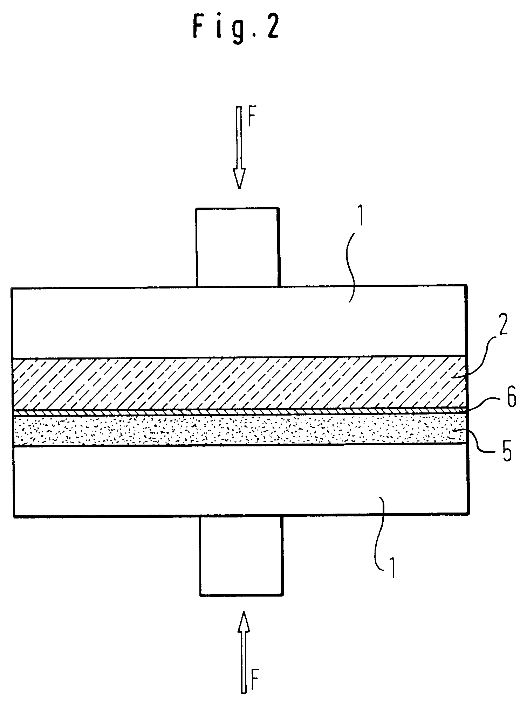

Wie es in Fig. 2 dargestellt ist, die schematisch eine Anordnung zur Durchführung des erfindungsgemäßen Verfahrens mit einem Preßstempel 1, einem keramischen Bauteil 2, einer Grafitbeschichtung 5 auf dem Preßstempel 1 und einer Reinaluminiumschicht 6 zeigt, kann dann, wenn die Benetzbarkeit des Preßstempels 1 oder der Beschichtung 6 des Preßstempels 1 deutlich höher als die Nichtbenetzbarkeit der zu beschichtenden Oberfläche, d. h. der Oberfläche des Keramikbauteils 2 ist, die Lotschicht als Oberflächenbeschichtung aufgebracht werden, wenn der Druck entsprechend gewählt wird. Ein Beispiel des nicht benetzbaren Materials ist dabei Al₂O₃.

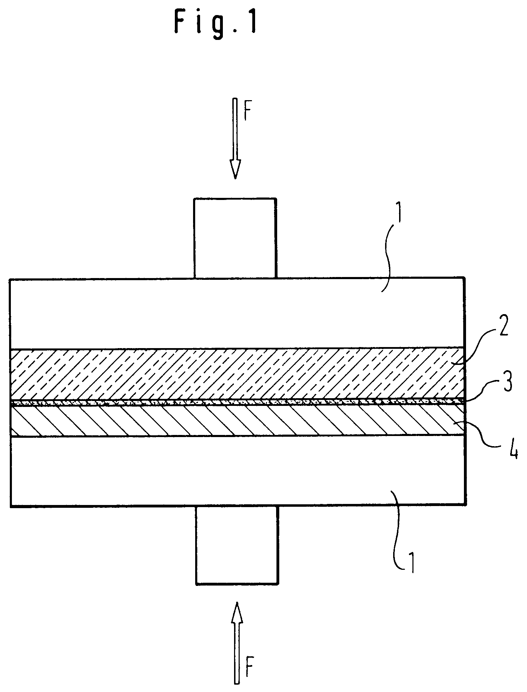

Gemäß Fig. 1, die eine ähnliche Ansicht wie Fig. 2 zeigt, ist es jedoch einfacher, zwischen einem Reinaluminiumbauteil 4 und dem keramischen Bauteil 2 eine Schicht 3 aus einer Aluminiumlotlegierung vorzusehen, die sich mit dem Reinaluminiumbauteil 4 verbindet, ohne daß das Reinaluminiumbauteil 4 aufgeschmolzen wird. Dabei kann ein bereits vorgefertigtes, mit der Lotlegierung plattiertes Metallblech verwendet werden, das die Komponenten 3 und 4 umfaßt. Bei einem Schichtaufbau Keramik-Metall-Keramik ist das Metallblech beidseitig plattiert. Dadurch sind dünne Lotschichten erzielbar.

Wenn zwei Bauteile, die durch das Lotmaterial nicht benetzt werden, beispielsweise zwei Keramikplatten verbunden werden sollen, wird zwischen den beiden Bauteilen eine Schicht des Lotmaterials in Form einer Folie oder in Form von feinen Drähten angeordnet, wird das Lotmaterial aufgeschmolzen und werden die beiden Bauteile anschließend durch Ausüben eines Druckes, d. h. durch Zusammenpressen verlötet. Durch die Form des zwischen den Bauteilen angeordneten Lotmaterials kann die geometrische Form der Verbindung bestimmt werden, was insbesondere dann erwünscht ist, wenn die Verbindungsstellen örtlich begrenzt, z.B. bahnförmig ausgebildet werden sollen.

Das erfindungsgemäße Verfahren hat insbesondere den Vorteil, daß gegenüber dem bekannten Verfahren nach der EP 0 187 025 A2 die zusätzliche Plattierungsschicht aus Nickel, Nickel-Blei oder Kobalt-Blei entfällt und ein Arbeiten an normaler Luft möglich ist.

Das erfindungsgemäße Verfahren ist allgemein für Lötverbindungen mit Schmelzen verwendbar, welche die zu verlötenden Bauteile schlecht oder nicht benetzen, wobei die zu verlötenden Bauteile durch die Schmelztemperatur des Lotes und den dabei herrschenden Druck nicht beschädigt werden. Das gilt insbesondere für Magnesium, Zinn und Zink als Lotmaterialien für Keramik, Stahl, Glas, Hartmetall usw. als Materialien der zu verbindenden Bauteile.

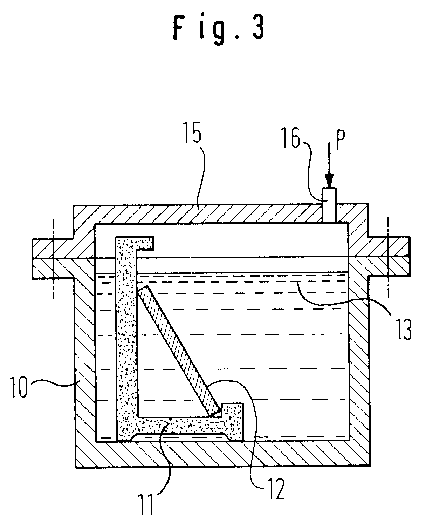

Im folgenden wird anhand von Fig. 3 noch ein Ausführungsbeispiel des erfindungsgemäßen Verfahrens beschrieben. Dieses Ausführungsbeispiel des erfindungsgemäßen Verfahrens dient zum Aufbringen einer Metallschicht auf die Oberfläche eines Bauteils aus einem Material, das durch eine Metallschmelze nicht ohne weiteres benetzbar ist. Ein derartiges Material kann wie bei den ersten beiden Ausführungsbeispielen ein keramisches Material, z.B. Al₂O₃ sein.

Eine Schmelze des Metalls der aufzubringenden Metallschicht wird gegen die Oberfläche des Bauteils gedrückt, wodurch diese benetzt wird, und die Schmelze wird anschließend abkühlen und aushärten gelassen.

Wie es in Fig. 3 dargestellt ist, wird somit die Nichtbenetzbarkeit zwischen dem Bauteil, das mit der Metallschicht zu versehen ist und der Metallschmelze dadurch überwunden, daß die Metallschmelze unter Druck gesetzt wird. Das kann mit der in Fig. 3 dargestellten Vorrichtung erzielt werden, die ein Druckgefäß 10 zeigt, in dem sich eine metallische Schmelze 13 befindet. Ein zu beschichtendes Bauteil 12 wird mittels eines Halters 11 in die Schmelze gegeben. Anschließend wird das Druckgefäß 10 mit einem Deckel 15 verschlossen und wird über einen Einlaß 16, der in den Innenraum des Druckgefäßes 10 führt, ein Druck auf die Schmelze aufgebracht, was beispielsweise pneumatisch, über magnetische Kräfte oder mechanisch erfolgen kann. Dabei wird die Nichtbenetzbarkeit zwischen der Schmelze 13 und dem zu beschichtenden Bauteil 12 überwunden.

Anschließend wird der Druck wieder abgebaut, wird der Deckel 15 geöffnet und wird das Bauteil 12 mittels des Halters 11 aus der Schmelze herausgenommen. Das Bauteil 12 ist dann mit der Metallschmelze benetzt und nach einer Abkühlung mit einer festen Metallschicht versehen. Diese Schicht kann dünner gemacht werden, indem die flüssige Schmelze beim Herausziehen aus dem Schmelzbad teilweise abgestreift wird oder die Metallschicht nach der Erstarrung mechanisch teilweise abgetragen wird, um als Lotschicht zum Verbinden oder Befestigen eines weiteren Bauteiles dienen. In diesem Fall wird das weitere Bauteil an dem mit der Metallotschicht versehenen Bauteil angeordnet und werden beide Bauteile miteinander verlötet.

Die in dieser Weise vorgesehene Metallschicht kann auch an bestimmten Flächenabschnitten weggeätzt werden, wodurch Leiterbahnen gebildet werden können. Das kann auch dadurch erfolgen, daß bestimmte Flächenabschnitte vor der Druckbenetzung durch geeignete Schichten, z.B. aus Graphit abgedeckt oder maskiert werden.

Der Halter 11 besteht aus einem Material mit hoher Nichtbenetzbarkeit, beispielsweise aus Graphit.

## Patentansprüche

1. Verfahren zum Aufbringen einer Metallschicht auf die Oberfläche eines Bauteils aus einem Material, das durch eine Metallschmelze nicht ohne weiteres benetzbar ist, dadurch gekennzeichnet, daß eine Schmelze des Metalls der aufzubringenden Metallschicht gegen die Oberfläche des Bauteils gedrückt wird, wodurch diese benetzt wird, und die Schmelze anschließend abkühlen und aushärten gelassen wird.

2. Verfahren nach Anspruch 1, dadurch gekennzeichnet, daß die Metallschicht aus einem Lotmetall gebildet wird und das mit der Lotmetallschicht versehende Bauteil mit einem weiteren Bauteil durch Verlöten verbunden wird.

3. Verfahren zum Verbinden von zwei Bauteilen, von denen wenigstens eines wenigstens im Bereich der Verbindungsfläche aus einem Material besteht, das durch eine Metallschmelze nicht ohne weiteres benetzbar ist, bei dem eine metallische Verbindungsschicht zwischen den Bauteilen vorgesehen wird, dadurch gekennzeichnet, daß eine Schmelze des Metalls der metallischen Verbindungsschicht zwischen den Bauteilen angeordnet und gegen die Verbindungsfläche des wenigstens einen nicht benetzbaren Bauteils gedrückt wird, wodurch diese benetzt wird und die Schmelze anschließend abkühlen und aushärten gelassen wird.

4. Verfahren nach Anspruch 3, dadurch gekennzeichnet, daß zum Verbinden eines Bauteils aus einem keramischen Material mit einem Bauteil aus Aluminium oder einer Aluminiumlegierung eine Lotschmelze aus einer Aluminiumlegierung verwandt wird.

5. Verfahren nach Anspruch 3, dadurch gekennzeichnet, daß zum Verbinden eines Bauteils aus einem keramischen Material mit einem Bauteil aus Magnesium oder einer Magnesiumlegierung eine Lotschmelze aus einer Magnesiumlegierung verwandt wird.

6. Verfahren nach Anspruch 3, dadurch gekennzeichnet, daß zum Verbinden zweier keramischer Bauteile eine Schmelze aus Reinaluminium oder Reinmagnesium oder einer Aluminiumlegierung oder Magnesiumlegierung verwandt wird.

7. Verfahren nach einem der Ansprüche 1 bis 6, dadurch gekennzeichnet, daß der Druck, mit dem die Lotschmelze gegen die Ober- oder Verbindungsfläche gedrückt wird, größer als 0,1 bis 0,2 MPa ist.

8. Verfahren nach Anspruch 7, dadurch gekennzeichnet, daß der Druck bei etwa 10 MPa liegt.

9. Verfahren nach einem der vorhergehenden Ansprüche, dadurch gekennzeichnet, daß die Zeit, über die die Lotschmelze gegen die Ober- oder Verbindungsfläche gedrückt wird, und die dabei herrschende Temperatur umgekehrt proportional zueinander sind.

10. Verfahren nach einem der vorhergehenden Ansprüche, dadurch gekennzeichnet, daß ein Lotmaterial verwandt wird, das einen niedrigeren Schmelzpunkt als das Material der zu verbindenden Bauteile hat.

11. Verfahren nach einem der vorhergehenden Ansprüche, dadurch gekennzeichnet, daß ein Lotmaterial verwandt wird, das ein kleines Schmelzintervall hat.

12. Verfahren nach einem der vorhergehenden Ansprüche, dadurch gekennzeichent, daß zum Andrücken der Lotschmelze ein Preßstempel verwandt wird, dessen Nichtbenetzbarkeit wesentlich höher als die Nichtbenetzbarkeit der zu benetzenden Verbindungsfläche ist.

13. Verfahren nach Anspruch 10, dadurch gekennzeichnet, daß der Preßstempel mit einem Material hoher Nichtbenetzbarkeit beschichtet ist.

14. Verfahren nach Anspruch 13, dadurch gekennzeichnet, daß der Presstempel mit Graphit beschichtet ist.

15. Verfahren nach einem der vorhergehenden Ansprüche, dadurch gekennzeichnet, daß zwischen der zu benetzenden Verbindungsfläche des Bauteils aus einem keramischen Material und einem Metallbauteil eine Reinmetallschicht vorgesehen wird.

16. Verfahren nach Anspruch 15, dadurch gekennzeichnet, daß die Lotlegierung eine Aluminiumlegierung und die Reinmetallschicht eine Reinaluminiumschicht ist.
